**Europäisches Patentamt**

**European Patent Office**

**Office européen des brevets**

(11) Veröffentlichungsnummer: **0 362 521**
**A2**

## (12) EUROPÄISCHE PATENTANMELDUNG

(21) Anmeldenummer: **89114999.9**

(22) Anmeldetag: **14.08.89**

(51) Int. Cl.⁵: **D04B 15/44** , **B65H 59/38** , **G05D 13/62**

(30) Priorität: **13.08.88 DE 3827453**

(43) Veröffentlichungstag der Anmeldung:
**11.04.90 Patentblatt 90/15**

(84) Benannte Vertragsstaaten:
**FR GB IT SE**

(71) Anmelder: **Geueke, Hubert**
**Unterberg 52**
**D-5653 Leichlingen(DE)**

(72) Erfinder: **Geueke, Hubert**
**Unterberg 52**
**D-5653 Leichlingen(DE)**
Erfinder: **Langer, Matthias, Dipl.-Ing.**
**Spindelstrasse 16**
**D-4418 Nordwalde(DE)**
Erfinder: **Föcking, Christoph, Dipl.-Ing.**
**Uhlenhorst 28**
**D-4418 Nordwalde(DE)**
Erfinder: **Lücke, Heinz**
**Laustrasse 14**
**D-4460 Rheine(DE)**

(54) **Verfahren und Vorrichtung eines elektronisch gesteuerten Mehrfaden-Zuführgerätes für Textilmaschinen.**

(57) Die Erfindung betrifft ein Mehrfaden-Fadenzuführgerät für Textilmaschinen, mit dem die Lauflänge eines Beilauf-Fadens oder mehrerer Beilauf-Fäden (vorzugsweise eines hochelastischen (Elasthan)-Filamentgarnes, insbesondere direkt von Spulen (über Kopf)) abgezogen, in jedem gewünschten Verhältnis zur jeweiligen Lauflänge des Grundfadens, vorzugsweise eines im wesentlichen unelastischen Garnes (z.B. Polyamid- oder Polyestergarnes), gesteuert werden kann und außerdem die Liefermenge (z.B. entsprechend den Form- oder Musterforderungen) veränderbar ist. Die Steuerung erfolgt vorzugsweise elektronisch, indem die jeweils an der Textilmachine verbrauchte Grund-Faden-Lauflänge an einer Meßeinrichtung (z.B. Referenzrad) erfaßt wird und zur (elektronisch geregelten) Steuerung der gleichzeitig der Textilmaschine zugeführten Beilauf-Fadenmenge benutzt wird. Die Verhältnisse zwischen Grund- und Beilauf-Faden können nach Musterungs- oder Formerfordernissen zusätzlich variiert werden. Hierfür wird vorzugsweise ein Kleincomputer zur Steuerung verwendet.

Die Erfindung beansprucht auch ein entsprechendes Verfahren zur gesteuerten Zuführung eines Mehrfaden-Systems an Textilmaschinen.

Das Gerät stellt insbesondere die von der Grundfadenlänge gesteuerte Zulieferung von Beilauf-Fäden - auch für Musterungseffekte und Spannungsunterschiede im Artikel - sicher.

Beilauf-Fadens zum Grund-Faden erwünscht, um hochwertige und gleichmäßige Gewirke/Gestricke zu erzielen. Im Fall von Musterungseffekten oder bei Formänderungen (z.B. unterschiedlichen Weiten, Formen und Kompressionszonen in Stützstrümpfen) soll darüber hinaus der Beilauf-Faden kurzzeitig vorprogrammiert auch in veränderten Verhältnissen zwischen Grund- und Beilauf-Faden den Textilmaschinen, gegebenenfalls abschnittsweise, zugeführt werden können.

Im Gegensatz zu den bisherigen Systemen, wo Einzelfäden für sich, nach irgendwelchen Verfahren geregelt, zugeführt werden, ist es eine der Aufgaben der Erfindung, den oder die Beilauf-(Effekt-)Fäden in Abhängigkeit vom jeweils verbrauchten Grund-Faden ("Hartfaden"), der in die Textilmaschine während der Verarbeitung eingezogen wird, geregelt zuzuführen.

Das Verfahren (und die Vorrichtung) sind insbesondere darauf abgestellt, einen hochelastischen Beilauf-Faden vom Elasthan/Spandex-Typ direkt von Einzelspulen über Kopf abzuziehen, ohne daß die sonst üblichen Probleme (beim Abrollen von Spulen über den Spulenwickel) auftreten. Abgesehen von den mechanischen Vorteilen soll hier auch die vorteilhafte Nutzung einer Fadenreserve möglich werden, die ein kontinuierliches Wechseln der Spulen während der Verarbeitung ermöglicht und beim Abrollen von Spulen nicht (sinnvoll) praktizierbar ist.

Es sollen auch in der Vorrichtung zusätzliche Mittel vorgesehen werden, um beim Anlaufen des Gerätes nicht zu Fadenabrissen zu führen, beim Stoppen des Zuführgerätes ein Auflaufen des Elasthangarnes auf den Transporteuren zu verhindern und den Faden bei Störungen z.B. Stromausfall gegebenenfalls freizugeben.

Diese Aufgaben der Erfindung sollen mit einer relativ einfachen Vorrichtung erzielt werden.

Weitere Aufgaben der Erfindung gehen aus der Beschreibung im einzelnen hervor.

Gegenstand der Erfindung ist somit eine elektronisch gesteuerte Vorrichtung zur Verwendung an Textilmaschinen unter Zuführung von Grund-Fäden und Beilauf-Fäden zu Textilmaschinen, bestehend aus

A) einem Sollwertgeber (Referenzrolle) für den Grund-Faden (1), mit einer freilaufenden Abnehmerrolle (3), die mittels einem Referenzwertgeber zur Drehzahlfassung, vorzugsweise einer angeschlossenen Lochscheibe (4) und einem Referenzwert-Erfassungsgerät, vorzugsweise einer Lichtschranke (2), auf ihre Drehzahl abgetastet wird und diesen Wert an eine Regeleinheit (C) abgibt, und

B) einem Lieferwerk (Transporteur) für den Beilauf-Faden (7), bestehend aus einem Walzenpaar (5, 6), von dem die eine Walze angetrieben (vorzugsweise mit einem Gleichstrommotor (12)) ist und von denen eine der Walzen mittels einem Drehzahl-Erfassungsgerät, vorzugsweise Lochscheibe und Lichtschranke, auf ihre Drehzahl abgetastet wird der Beilauf-Faden zwischen dem Walzenpaar schlupffrei transportiert wird, und

C) einem elektronischen Regelteil, das den Referenzwert des Sollwertgebers in (A) zur Regelung des Lieferwerks (B) für den Beilauf-Faden (7) in erwünschten, gegebenenfalls variablen Verhältnissen umsetzt und

D) einer zusätzlichen Steuereinheit (D) zur Einstellung der erwünschten Verhältnisse, z.B. einem Potentiometer, vorzugsweise einem Computer, welcher nach Vorgaben, wie Musterungsvorgaben oder Form-und Spannungsvorgaben das Verhältnis von Grund-Faden (1) und Beilauf-Faden (7) kurzfristig oder abschnittsweise, vorzugsweise programmiert, verändert.

Die Steuereinheit D) wird vorzugsweise in Form eines (Single Board)Computers eingesetzt.

Weiterer Gegenstand der Erfindung ist eine Vorrichtung des gegebenen Aufbaus, dadurch gekennzeichnet, daß der Sollwertgeber (A) eine freilaufende Abnehmerrolle (3) mit angeschlossener Lochscheibe (4) und Lichtschranke (2) zur Erfassung der Grund-Faden-Lauflänge beinhaltet und der Wert an ein elektronisches Regelteil (C) abgegeben wird und derart zur Steuerung der angetriebenen Walze des Lieferwerkes (5), welche ebenfalls durch eine Lochscheibe (3') plus Lichtschranke (2') abgetastet wird, benutzt wird.

In einer Vorrichtung nach der beschriebenen Art wird vorzugsweise im Lieferwerk (B) eine der Rollen (vorzugsweise die nicht angetriebene Rolle (6)) magnetisch an die Lieferrolle angepreßt und bei Stillstand oder Störung abfallen gelassen und erst oberhalb einer Minimalgeschwindigkeit wieder eingekuppelt. Das Anpressen/Abfallen der Lieferrolle wird elektromechanisch, z.B. über einen Elektromagneten, bewirkt.

Weiterhin wird eine Vorrichtung der gegebenen Art beansprucht, wo beim Stoppen des Lieferwerkes (B) oder der Textilmaschine (8) ein Nachlaufen der Roll (6) durch eine Bremsvorrichtung verhindert wird.

Gegenstand der Erfindung ist auch ein Verfahren zur Zuführung von Fäden durch ein Lieferwerk zu einer Textilmaschine, dadurch gekennzeichnet, daß bei einem Mehrfaden-System aus Grund-Fäden (1) und Beilauf-Fäden (7) die Lauflänge eines Beilauf-Fadens (oder mehrerer Beilauf-Fäden, vorzugsweise eines hochelastischen Elasthan-Fadens) in einem einstellbaren Verhältnis zur jeweiligen Lauflänge des Grund-Fadens (vorzugsweise Hartfäden wie Polyester- oder Polyamid-Fäden oder -Garnen) über ein Regelteil

Beilauf-Fadens zum Grund-Faden erwünscht, um hochwertige und gleichmäßige Gewirke/Gestricke zu erzielen. Im Fall von Musterungseffekten oder bei Formänderungen (z.B. unterschiedlichen Weiten, Formen und Kompressionszonen in Stützstrümpfen) soll darüber hinaus der Beilauf-Faden kurzzeitig vorprogrammiert auch in veränderten Verhältnissen zwischen Grund- und Beilauf-Faden den Textilmaschinen, gegebenenfalls abschnittsweise, zugeführt werden können.

Im Gegensatz zu den bisherigen Systemen, wo Einzelfäden für sich, nach irgendwelchen Verfahren geregelt, zugeführt werden, ist es eine der Aufgaben der Erfindung, den oder die Beilauf-(Effekt-)Fäden in Abhängigkeit vom jeweils verbrauchten Grund-Faden ("Hartfaden"), der in die Textilmaschine während der Verarbeitung eingezogen wird, geregelt zuzuführen.

Das Verfahren (und die Vorrichtung) sind insbesondere darauf abgestellt, einen hochelastischen Beilauf-Faden vom Elasthan/Spandex-Typ direkt von Einzelspulen über Kopf abzuziehen, ohne daß die sonst üblichen Probleme (beim Abrollen von Spulen über den Spulenwickel) auftreten. Abgesehen von den mechanischen Vorteilen soll hier auch die vorteilhafte Nutzung einer Fadenreserve möglich werden, die ein kontinuierliches Wechseln der Spulen während der Verarbeitung ermöglicht und beim Abrollen von Spulen nicht (sinnvoll) praktizierbar ist.

Es sollen auch in der Vorrichtung zusätzliche Mittel vorgesehen werden, um beim Anlaufen des Gerätes nicht zu Fadenabrissen zu führen, beim Stoppen des Zuführgerätes ein Auflaufen des Elasthangarnes auf den Transporteuren zu verhindern und den Faden bei Störungen z.B. Stromausfall gegebenenfalls freizugeben.

Diese Aufgaben der Erfindung sollen mit einer relativ einfachen Vorrichtung erzielt werden.

Weitere Aufgaben der Erfindung gehen aus der Beschreibung im einzelnen hervor.

Gegenstand der Erfindung ist somit eine elektronisch gesteuerte Vorrichtung zur Verwendung an Textilmaschinen unter Zuführung von Grund-Fäden und Beilauf-Fäden zu Textilmaschinen, bestehend aus

A) einem Sollwertgeber (Referenzrolle) für den Grund-Faden (1), mit einer freilaufenden Abnehmerrolle (3), die mittels einem Referenzwertgeber zur Drehzahlfassung, vorzugsweise einer angeschlossenen Lochscheibe (4) und einem Referenzwert-Erfassungsgerät, vorzugsweise einer Lichtschranke (2), auf ihre Drehzahl abgetastet wird und diesen Wert an eine Regeleinheit (C) abgibt, und

B) einem Lieferwerk (Transporteur) für den Beilauf-Faden (7), bestehend aus einem Walzenpaar (5, 6), von dem die eine Walze angetrieben (vorzugsweise mit einem Gleichstrommotor (12)) ist und von denen eine der Walzen mittels einem Drehzahl-Erfassungsgerät, vorzugsweise Lochscheibe und Lichtschranke, auf ihre Drehzahl abgetastet wird der Beilauf-Faden zwischen dem Walzenpaar schlupffrei transportiert wird, und

C) einem elektronischen Regelteil, das den Referenzwert des Sollwertgebers in (A) zur Regelung des Lieferwerks (B) für den Beilauf-Faden (7) in erwünschten, gegebenenfalls variablen Verhältnissen umsetzt und

D) einer zusätzlichen Steuereinheit (D) zur Einstellung der erwünschten Verhältnisse, z.B. einem Potentiometer, vorzugsweise einem Computer, welcher nach Vorgaben, wie Musterungsvorgaben oder Form-und Spannungsvorgaben das Verhältnis von Grund-Faden (1) und Beilauf-Faden (7) kurzfristig oder abschnittsweise, vorzugsweise programmiert, verändert.

Die Steuereinheit D) wird vorzugsweise in Form eines (Single Board)Computers eingesetzt.

Weiterer Gegenstand der Erfindung ist eine Vorrichtung des gegebenen Aufbaus, dadurch gekennzeichnet, daß der Sollwertgeber (A) eine freilaufende Abnehmerrolle (3) mit angeschlossener Lochscheibe (4) und Lichtschranke (2) zur Erfassung der Grund-Faden-Lauflänge beinhaltet und der Wert an ein elektronisches Regelteil (C) abgegeben wird und derart zur Steuerung der angetriebenen Walze des Lieferwerkes (5), welche ebenfalls durch eine Lochscheibe (3') plus Lichtschranke (2') abgetastet wird, benutzt wird.

In einer Vorrichtung nach der beschriebenen Art wird vorzugsweise im Lieferwerk (B) eine der Rollen (vorzugsweise die nicht angetriebene Rolle (6)) magnetisch an die Lieferrolle angepreßt und bei Stillstand oder Störung abfallen gelassen und erst oberhalb einer Minimalgeschwindigkeit wieder eingekuppelt. Das Anpressen/Abfallen der Lieferrolle wird elektromechanisch, z.B. über einen Elektromagneten, bewirkt.

Weiterhin wird eine Vorrichtung der gegebenen Art beansprucht, wo beim Stoppen des Lieferwerkes (B) oder der Textilmaschine (8) ein Nachlaufen der Roll (6) durch eine Bremsvorrichtung verhindert wird.

Gegenstand der Erfindung ist auch ein Verfahren zur Zuführung von Fäden durch ein Lieferwerk zu einer Textilmaschine, dadurch gekennzeichnet, daß bei einem Mehrfaden-System aus Grund-Fäden (1) und Beilauf-Fäden (7) die Lauflänge eines Beilauf-Fadens (oder mehrerer Beilauf-Fäden, vorzugsweise eines hochelastischen Elasthan-Fadens) in einem einstellbaren Verhältnis zur jeweiligen Lauflänge des Grund-Fadens (vorzugsweise Hartfäden wie Polyester- oder Polyamid-Fäden oder -Garnen) über ein Regelteil

3

EP 0 362 521 A2

gesteuert wird, indem die Ablaufmenge des Grund-Fadens (1) in einer Referenzrolle (A) über eine freilaufende Abnehmerrolle (3) mit einem Referenzwertgeber zur Drehzahlmessung (vorzugsweise mittels einer an die Rolle angeschlossene Lochscheibe (4) und einem Referenzwert-Erfassungsgerät (vorzugsweise einer Lichtschrankeneinrichtung (2)) abgetastet wird und dessen Referenz-Wert an einen (elektronische) Regelein heit (C) abgegeben wird, welche das Lieferwerk (Transporteur) (B), bestehend aus einem Walzenpaar, von denen die eine mit einem Motor, über (C) geregelt (vorzugsweise einem Gleichstrommotor) angetrieben wird und von denen eine Walze mit einem Drehzahl-Erfassungsgerät (vorzugsweise einen an die Walze angebrachte Lochscheibe mit einer Lichtschranke) auf ihre Drehzahl abgetastet wird, kontrolliert und abgleicht und der Beilauf-Faden zwischen dem Walzenpaar schlupffrei transportiert und den Nadeln der Textilverarbeitungsmaschine (vorzugsweise einer (Rund)Strickmaschine) zugeführt wird.

Der Beilauf-Faden (7) kann so in seiner Lauflänge in einstellbaren Verhältnissen zum Grund-Faden (1) den Nadeln einer Textilmaschine (8) zugeführt werden. Die Nadeln erhlaten - abhängig von eventuell schwankendem Hart-Faden (1)-Verbrauch (Fadenlängen) immer im vorbestimmbaren Verhältnis (x) eine entsprechende Fadenlänge des Beilauf-Fadens (7).

Durch diese technisch relativ einfache und leicht der Textilmaschine zumontierbare, erfindungsgemäße Vorrichtung können sehr gleichmäßig ausfallende Gewirke bzw. Gestricke hergestellt werden.

Eine besondere Bedeutung hat diese Vorrichtung und das Verfahren für die Verwendung eines hochelastischen Beilauf-Fadens (vom Elasthan- bzw. Spandex-Typ). Hierbei kann der Elasthan-Faden innerhalb der Elasthan-Dehngrenzen in einem gewünschten Verhältnis zum von der Maschine entsprechend ihrem aktuellen Verbrauch bei der Maschenbildung eingezogenen Grund-Faden von dem Lieferwerk (B) der Textilmaschine (8) zugeliefert werden. Das Verhältnis kann dabei bis zu etwa 0,15:1, zumeist 0,2:1 (Elasthan-/zu Grund-Faden-Lauflängen-Förderung), vorzugsweise 0,25:1 bis 0,95:1 oder 0,33:1 bis 0,8:1 betragen. Das bedeutet, daß bei einem Verhältnis x von z.B. 0,2:1 der Elasthan-Faden auf den Weg zwischen dem Walzendruckpunkt des Lieferwerkes (B) und den Nadeln (8) der Textilmaschine um 400 % verdehnt (d.h. auf das fünffache seiner ursprünglichen Länge gedehnt) wird.

Hierbei kann das Verhältnis x in der maximalen Verdehnung beispielsweise bis etwa 0,15:1 betragen (566 % Dehnung).

Bei einem Verdehnungsverhältnis x) bedeutet dies beispielsweise eine Verdehnung um y % bzw, eine Verdehnung aus das z-fache seiner ursprünglichen Länge, entsprechend der Formel $y = (z-1) \cdot 100\%$ bzw.,da $x = 1/z$ ist, $y = (1/x-1) \cdot 100\%$.

| x | y | z |
|---|---|---|
| 0,15 | um 566 % | auf das 6,66-fache der Länge |
| 0,2 | um 400 % | auf das 5-fache der Länge |
| 0,25 | um 300 % | auf das 4-fache der Länge |
| 0,33 | um 200 % | auf das 3-fache der Länge |
| 0,5 | um 100 % | auf das 2-fache der Länge |
| 0,75 | um 33 % | auf das 1,33-fache der Länge |
| 0,8 | um 25 % | auf das 1,25-fache der Länge |

Wie hieraus leicht ersichtlich, kann so über die Lauflängensteuerung des Beilauf-Fadens (Elasthan-Fadens) in Relation zur jeweiligen Lauflänge des Grund-Fadens während der Verarbeitung eine ausgezeichnete Spannungskonstanthaltung des Elasthan-Fadens während der Verarbeitung erzielt werden.

Ein weiterer Vorteil ergibt sich bei Einsatz dieser erfindungsgemäßen Vorrichtung: Sie kann zwar prinzipiell für alle Zulieferungsarten, z.B. positive Abrollung und Spulen eingesetzt werden, ist aber besonders geeignet, auch von Einzelspulen den Beilauf-Faden vom Fadenwickel über Kopf abzuziehen. Im Gegensatz zur positiven Abrollung unter jeweiliger Walkung des Wickelkörpers, kann ein gleichmäßigerer Ablauf erhlaten werden, ohne daß die Wickellagen zunehmend störend beeinflußt werden. Außerdem wird die sogenannte Fadenreserve einer Spule verwertbar, d.h. es kann über die Fadenreserve eine Spule mit der anderen verknüpft und so kontinuierlich weitergearbeitet werden.

Mittels der Steuer/Regeleinheiten C/D können auch zusätzlich in einfacher Weise computermäßig Daten erfaßt werden, z.B. Produktivität, Stillstandszeiten, Fadenbruchzahlen und so fort.

Die Einheit D) wäre im (nicht bevorzugten) einfachsten Fall ein Potentiometer, ist vorzugsweise jedoch ein Computer mit Schnittstellen zu anderen Computern (z.B. zu besonderer Musterungs- bzw. Spannungseffektvariation), oder zur Übernahme von Signalen, welche direkt von Textilmaschinen oder deren Steuerungen kommen können.

4

Als Elasthan-Fäden kommen Fadentiter von beispielsweise $\geq$ 20, z.B. 20 bis 500 dtex, vorzugsweise von 20 bis 300 dtex, insbesondere 30 bis 200 dtex in Frage, doch ist das Verfahren nicht auf diese Titer beschränkt. Diese Elasthan-Fäden können Dehnungen bis etwa 800 %, zumeist bis etwa 600 % besitzen. Maximal ist das Verdehnungsverhältnis vom Beilauf-Faden zum Grund-Faden durch die Bruchdehnungsgrenze limitiert.

Neben hochelastischen (Elasthan-)Fäden können als Beilauf-Fäden auch texturiete Garne, z.B. texturierte Polyamid- oder Polyestergarne, zugeführt werden. Deren Dehnbarkeit liegt im allgemeinen wesentlich niedriger, etwa bis 33 %. Entsprechend ist die Einlauflänge der texturierten Beilauf-Fäden auf etwa 75 % der Einlauflänge des Grund-Fadens begrenzt (Verstreckverhältnis x = 0,75). Auch hier führt die Variation des Verstreckverhältnisses zu entsprechenden Effekten im gefertigten textilen Flächengebilde, sei es zu unterschiedlicher Dehnung/Spannung, sei es zu Mustereffekten.

Die Beilauf-Fäden können beliebige Effekt-Fäden sein, z.B. gefärbt, mattiert, metallisiert oder anders modifiziert sein. Die Beilauf-Fäden können jedoch auch weitgehend unelastische Fäden sein, doch wird hier das Verstreckverhältnis x nur wenig von 1 abweichen; jedoch sind hier auch Musterungssteuerungen möglich, besonders bei Textilverarbeitungsmaschinen mit Jacquard-Mustereinrichtungen.

In einer besonderen Ausführungsform der Erfindung verwendet man eine Vorrichtung, bei der das auf der Lauflänge des Grund-Fadens basierende, eingestellte Verstreckverhältnis x entsprechend einer gewünschten Form oder Musterung (programmiert) verändert, z.B. maschenweise, reihenweise oder segmentweise, sprungweise oder kontinuierlich verändert wird.

So ist es bei Anwendung der Vorrichtung an Rundstrickmaschinen zur Herstellung von Stützstrümpfen erwünscht, bestimmte Partien (z.B. Bund- oder Kompressionszonen) mit verstärkter Kompressionskraft der Elasthan-Fäden herzustellen. Durch eine zusätzliche Regeleinheit, vorzugsweise durch einen Single Board Computer, kann diese zusätzliche Steuerung (D) dem Regelteil (C) überlagert oder ersetzt werden. Entsprechend der Steuerung über (D) wird somit in beliebigen Teilbereichen eines Artikels synchron zum Verarbeitungsvorgang die Längenänderung des Beilauf-Fadens vorprogrammiert und der betreffende Beilauf-Faden wird in Länge (und somit auch) Spannung jeweils genau dosiert der Textilverarbeitungsmaschine zugeführt. Mittels (D) lassen sich auch Musterungseffekte beliebiger Art in Abhängigkeit von Musterprogrammen steuern, indem das Verstreckverhältnis x des Beilauf-Fadens zusätzlich zu dessen zu bemessender Fadenlänge variiert wird.

Eine solche Musterungsmöglichkeit durch die erfindungsgemäße Vorrichtung ist auch für Textilmaschinen mit Jacquard-Musterungseinrichtungen einsetzbar.

Die Beilaufgarne können nackte, gegebenenfalls texturierte Fäden, Filamente oder Spinngarne oder Umwindungsgarne, Blasgarne (z.B. durch Luftverwirbelung von Elasthan-Filamenten mit multifilen Hartgarnen hergestellt) sein. Vorzugsweise sind es nackte Elasthangarne.

Die Grund-Fäden sind im allgemeinen wenig elastische Fäden (Filamente oder Garne aus synthetischen oder natürlichen Faserstoffen oder auch halbsynthetischen Faserstoffen, z.B. Polyester-/Polyamid-Filamente oder -Garne, Viskose-Fäden oder -Garne, Wollgarne, Baumwollgarne, texturierte Fäden oder Mischgarne etc.

Der Grund-Faden wird (z.B. von Spulen) durch die Textilmaschine entsprechend deren Materialbedarf bei der Maschenbildung in die Maschine eingezogen. Der Grund-Faden wird durch die leichtbewegliche, freilaufende Referenzrolle (A) hinsichtlich seiner Länge bestimmt. Hierzu wird der Faden vorzugsweise ein- oder mehrmals über die freilaufende Rolle geschlungen und liefert somit den Referenzwert an verbrauchter Fadenlänge. Der Grund-Faden wird der Textilmaschine (gegebenenfalls über weitere Umlenkorgane) zugeführt.

Der Beilauf-Faden wird - vorzugsweise von Einzelspulen über Kopf, insbesondere bei Elasthanen - in das Lieferwerk (B) ("Transporteur") mit dem vorbestimmten, eventuell durch den Computer (D) modifizierten Verhältnis x eingezogen, in dem Walzenpaar des Lieferwerks (B) festgeklemmt und so auf seinem Weg zu der Verarbeitungsstelle an der Textilmaschine (z.B. Nadeln einer Strickmaschine) entsprechend verdehnt, bzw. gegebenenfalls sogar entlastet.

Bei Stillstand und Wiederanlaufen der Strickmaschine oder bei mechanischen Justierungen oder Störungen der Maschine muß diese z.B. von Hand betätigt werden. Dabei setzt sich natürlich auch der Referenz-Grundfaden und somit auch die Abnehmerrolle in Bewegung, so daß auch durch das Lieferwerk der Beilauffaden gefördert würde. Bei diesen niedrigen Geschwindigkeiten wird aber der Fehler der Regelelektronik oft relativ groß.

In einer bevorzugten Ausführungsform der Vorrichtung und des Verfahrens wird daher in dem Lieferwerk (B) die zweite, nicht angetriebene Rolle als Andrucksrolle 6) ausgebildet, welche (z.B. mittels eines Elektro-Magneten und entsprechender Mechanik) für den Betrieb angepreßt wird, aber bei Stillstand oder Störung abfällt und erst oberhalb einer festlegbaren Mindestgeschwindigkeit wieder (magnetisch) angepreßt wird.

Eine weitere, bevorzugte Ausführungsform betrifft eine Vorrichtung, welche bei Abstellen oder Störungen ein Nachlaufen der Referenzrolle verhindert, damit sich nicht der Grund-Faden auf den Rollen in unerwünschter Weise aufrollt und der Beilauf-Faden weitertransportiert wird. Dies kann z.B. mittels einer magnetischen Bremse oder einer mechanischen Bremsmechanik, ausgelöst bei Ausfall der Einrichtung, geschehen. Zur Sicherheit gegen Durchbrennen des Antriebstransistors und des Motors wird bei Blockieren der Rollen durch evtl. aufgelaufene Fäden vorzugsweise ein elektronischer Strombegrenzer eingesetzt.

In den Sollwertgeber (A) wird beispielsweise die Geschwindigkeit, z.B. mittels kugelgelagerter Kunststoffrolle vom Durchmesser 20 mm, über die der zu messende Referenz-Grundfaden (mit Umschlingung) gelegt wird und einer daran angeordneten Lochscheibe mit 30 Löchern mittels einer (Gabel)Lichtschranke gemessen. Die Lichtschranke tastet die Drehbewegung des Geschwindigkeitsmessers ab und wandelt diese in elektrische Impulse um. Die sich daraus ergebende Frequenz ist proportional zur Geschwindigkeit des Fadens.

Die erzeugte Frequenz wird z.B. mittels eines integrierten Frequenz-/Spannungs-Umsetzers in eine proportionale Gleichspannung umgesetzt, die z.B. an einem Y-t-Schreiber (vorzugsweise direkt in m/sec geeicht) umgesetzt (und somit anzeigbar) wird und zur weiteren Verarbeitung an das Stellglied weitergeleitet wird.

Für den (analogen) Regelkreis werden vorzugsweise zwei Frequenz-Spannungs-Umsetzer erforderlich: einer für die Umsetzung des Sollwertes des Referenz-Grundfadens, der andere für die Erfassung des Istwertes des (Gleichstrom) Motors. Die Rechteckimpulse werden z.B. (in invertierenden Schmitt-Triggern) auf TTL-Pegel gebracht.

In einer bevorzugten Ausführungsform wird eine Schaltmöglichkeit (16) vorgesehen, den Referenzwert des Grundfadens auf Null zu stellen, d.h. die Andrucksrolle in Lieferwerk (B) fällt ab.

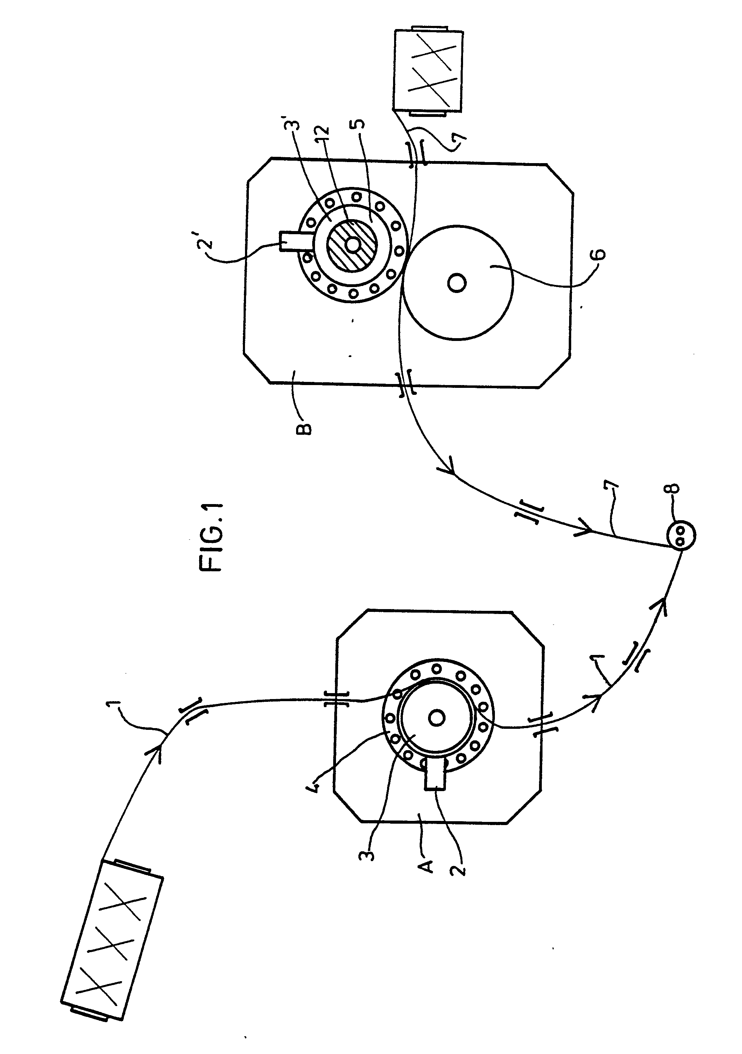

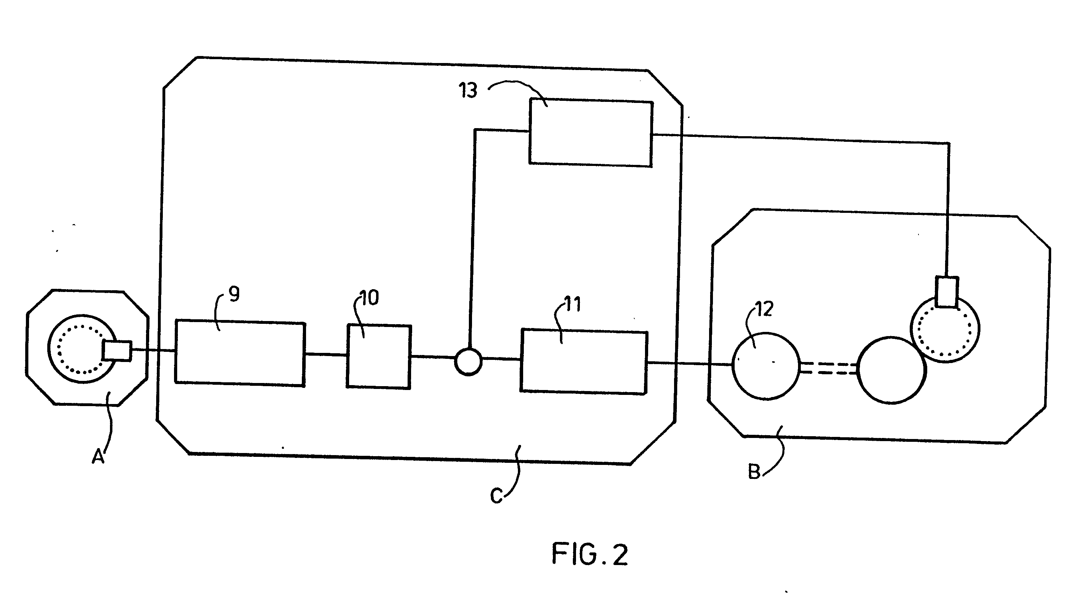

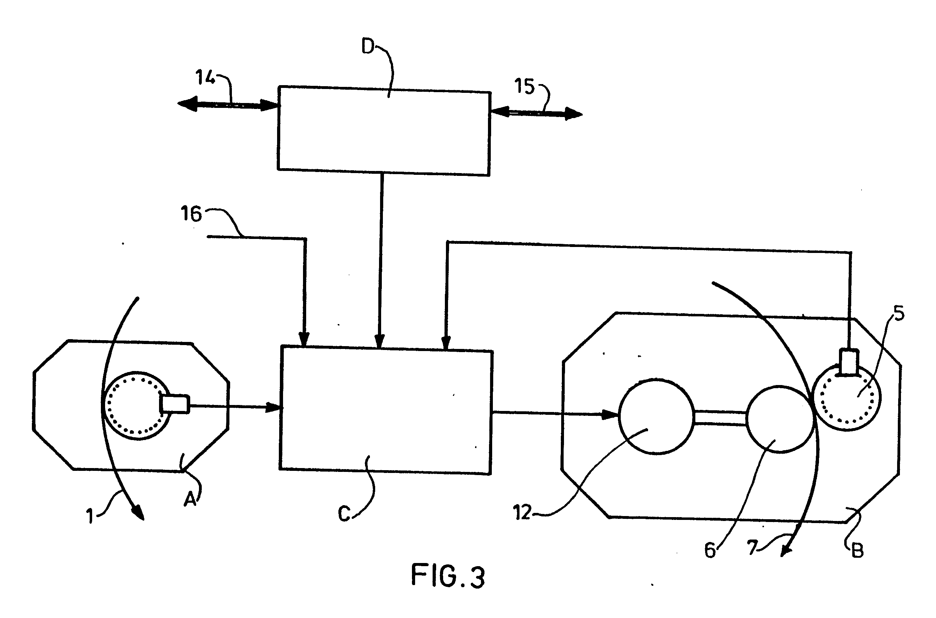

Zur Änderung des Verdehnungsverhältnisses (x) wird nach Signalaufarbeitung (9), vgl. Fig. 2, in einem Stellglied (10) z.B. nur ein Teil der Steuerspannung an den Regler (11) weitergeleitet. Damit wird das Verhältnis des zurückgelegten Weges des Referenz-Grundfadens und dem Beilauf-(Elasthan)-Faden variabel gemacht.

In der bevorzugten, programmierbaren Ausführungsform übernimmt beispielsweise ein Digital-Analog-Umsetzer die Aufgabe des Stellgliedes (10).

Die Signalaufbereitung von der Meßwerterfassung im Lieferwerk (B) wird zurückgeführt und entsprechend erfaßt. Dies wird in der Fig. 2, einem Funktionsbild für die Steuerung für das Referenzrad (A) und das Lieferwerk (B) wiedergegeben. In Fig. 3 wird gezeigt, in welcher Weise das Referenzrad (A) und das Lieferwerk (B) über den Regelteil (C) mit einem muster- oder spannungs-modifizierend eingreifenden Computerteil (D) verknüpft werden.

In den Abbildungen bedeutet

(12) einen Gleichstrommotor,

(11) einen Regelverstärker,

(13) einen Signalaufbereitungs-Istwert,

(9) Signalaufbereitungs-Sollwert,

(14) Schnittstelle zur Erfassung der Textilmaschinendaten, z.B. Startsignale oder Synchronisationssignale).

(15) Schnittstelle für Datenaustausch (z.B. Tastatureingabe, Anzeige oder Datenaustausch mit anderen Computern)

(16) Schaltmöglichkeit, z.B. für Stop-Signal der Textilmaschine.

## Ansprüche

1. Elektronisch gesteuerte Vorrichtung zur Verwendung an Textilmaschinen unter Zuführung von Grund-Fäden und Beilauf-Fäden, bestehend aus

A) einem Sollwertgeber (Referenzrolle) für den Grund-Faden, mit einer freilaufenden Abnehmerrolle, die mittels einem Referenzwertgeber zur Drehzahlerfassung, vorzugsweise einer angeschlossenen Lochscheibe und einem Referenzerfassungsgerät, vorzugsweise einer Lichtschranke, auf ihre Drehzahl abgetastet wird und diesen Wert an eine Regeleinheit (C) abgibt,

und

B) einem Lieferwerk (Transporteur) für den Beilauf-Faden, das von einem Motor (vorzugsweise einem Gleichstrommotor) angetrieben wird, bestehend aus einem Walzenpaar, von denen eine Walze angetrieben ist und von denen eine Walze mittels Lochscheibe und Lichtschranke auf ihre Drehzahl abgetastet wird und wodurch der Beilauf-Faden zwischen den Walzenpaaren schlupffrei transportiert wird und

(C) einem elektronischen Regelteil, das den Referenzwert des Sollwertgebers von (A) zur Regelung des Lieferwerkes (B) für den Beilauf-Faden in erwünschten gegebenenfalls variablen Verhältnissen umsetzt und

D) einer zusätzlichen Steuereinheit (D) zur Einstellung der erwünschten Verhältnisse, vorzugsweise einen Computer, welcher nach Musterungsvorgabe oder Form- und Spannungsvorgaben das Verhältnis von Grund-Faden und Beilauf-Faden kurzfristig oder abschnittsweise, vorzugsweise programmiert, verändert.

2. Vorrichtung nach Anspruch 1, dadurch gekennzeichnet, daß der Sollwertgeber (A) eine freilaufende Abnehmerrolle mit angeschlossener Lochscheibe und Lichtschranke zur Erfassung der Grund-Faden-Ablauflänge beinhaltet und der Wert an ein elektronisches Regelteil (C) abgegeben wird und dort zur Steuerung der angetriebenen Walze des Lieferwerkes, welche ebenfalls durch eine Lochscheibe plus Lichtschranke abgetastet wird, benutzt wird.

3. Vorrichtung nach Ansprüchen 1 und 2, dadurch gekennzeichnet, daß im Lieferwerk (B) eine der Rollen, vorzugsweise die nicht angetriebene Rolle magnetisch an die angetriebene Lieferrolle angepreßt wird und bei Stillstand oder Störung abfällt und erst oberhalb einer Minimalgeschwindigkeit wieder einkuppelt.

4. Vorrichtung nach Ansprüchen 1 bis 3, dadurch gekennzeichnet, daß beim Stoppen des Lieferwerkes oder der Textilmaschine ein Nachlaufen der Rolle durch eine Bremsvorrichtung schnell gestoppt wird.

5. Verfahren zur Zuführung von Fäden durch ein Lieferwerk zu einer Textilmaschine, dadurch gekennzeichnet, daß bei einem Mehrfaden-System aus Grund-Fäden und Beilauf-Fäden die Lauflänge des Beilauf-Fadens (vorzugsweise eines hochelastischen Fadens) in einem einstellbaren Verhältnis zur jeweiligen Lauflänge des Grund-Fadens (vorzugsweise Hartfäden wie Polyester oder Polyamid) über ein Regelteil (C) gesteuert wird, indem die Ablaufmenge des Grundfadens in einer Referenzrolle (A) über eine freilaufende Abnehmerrolle mit einem Referenzwertgeber zur Drehzahlmessung, vorzugsweise mittels einer an die Rolle angeschlossenen Lochscheibe und einem Referenzwert-Erfassungsgerät, vorzugsweise einer Lichtschrankeneinrichtung, abgetastet wird und dessen Referenz-Wert an eine (elektronische) Regeleinheit (C) abgegeben wird, welche

das Lieferwerk (B) bestehend aus einem Walzenpaar, von denen eine mit einem Motor, über (C) geregelt, vorzugsweise einem Gleichstrommotor, angetrieben wird und von denen eine Walze mit einem Drehzahlerfassungsgerät, vorzugsweise einer an die Walze angebrachte Lochscheibe mit einer Lichtschranke, auf ihre Drehzahl abgetastet wird, kontrolliert und abgleicht

und der Beilauffaden zwischen dem Walzenpaar schlupffrei transportiert und die Nadel der Textilverarbeitungsmaschine, vorzugsweise einer Rundstrickmaschine, zugeführt wird.

FIG.1

EP 0 362 521 A2

FIG.2

EP 0 362 521 A2

FIG.3

EP 0 362 521 A2